(19) Europäisches Patentamt
European Patent Office
Office européen des brevets

(11) **EP 4 258 238 A1**

(12) **DEMANDE DE BREVET EUROPEEN**

(43) Date de publication:
**11.10.2023 Bulletin 2023/41**

(21) Numéro de dépôt: **22305492.5**

(22) Date de dépôt: **08.04.2022**

(51) Classification Internationale des Brevets (IPC):
**G08G 1/01** *(2006.01)*   **G06N 3/02** *(2006.01)*
**G06V 20/54** *(2022.01)*   **G08G 1/04** *(2006.01)*
**G08G 1/017** *(2006.01)*   **G06V 20/59** *(2022.01)*
**G06V 10/82** *(2022.01)*

(52) Classification Coopérative des Brevets (CPC):
**G08G 1/0116; G06N 3/02; G06V 10/82;
G06V 20/54; G06V 20/593; G08G 1/0129;
G08G 1/0141; G08G 1/0175; G08G 1/04**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**KH MA MD TN**

(71) Demandeur: **CYCLOPE.AI**
**92000 Nanterre (FR)**

(72) Inventeurs:
• **NAKIB, Amir**
**94240 L'Hay les Roses (FR)**
• **LOQUET, Stéphane**
**84210 Pernes les Fontaines (FR)**

(74) Mandataire: **Novagraaf Technologies
Bâtiment O2
2, rue Sarah Bernhardt
CS90017
92665 Asnières-sur-Seine Cedex (FR)**

(54) **DISPOSITIF POUR LA SURVEILLANCE D'UNE PORTION DE ROUTE ET POUR LE COMPTAGE DE PASSAGERS AU SEIN DES VEHICULES**

(57) Dispositif (D) pour la surveillance d'une portion de route, comportant un boîtier sécurisé contenant au moins
- un ensemble d'appareils (C1, C2, C3) de prise de vue permettant d'obtenir au moins une prise de vue avant, une série de prise de vue de côté et au moins une prise de vue arrière, d'un véhicule présent sur cette portion;

- une plateforme de traitement (T1, T2, T3) permettant de déterminer un identifiant du véhicule, de mettre en correspondance les prises de vue, de déterminer un nombre de passagers associés au véhicule, de construire une fiche pour ledit véhicule rassemblant l'identifiant, les prises de vue et le nombre de passagers et de transmettre la fiche vers un serveur distant (S).

Fig. 1

EP 4 258 238 A1

## Description

### Domaine de l'invention

La présente invention est relative à un dispositive de surveillance d'une portion de route. Elle vise en particulier à permettre le comptage d'un nombre de passagers embarqués dans un véhicule circulant sur une voie d'une route.

### Contexte de l'invention

Différents mécanismes de surveillance de route existent afin de déterminer différentes mesures sur le trafic ou sur les véhicules circulants sur une portion de route.

D'une façon générale, toutefois, ces dispositifs ne permettent que des solutions partielles à la problématique générale de la surveillance d'une portion de route et sont dédiés à un type de surveillance particulier : comptage automatique de véhicule, détection de plaque d'immatriculation, détection d'accidents, etc.

On peut par exemple citer la page wikipedia suivante qui regroupe une partie de l'état de la technique : https://fr.wikipedia.org/wiki/Caméra_de_surveillance_routière

Beaucoup de dispositifs visent à évaluer le trafic afin de par exemple pouvoir fournir des informations aux usagers qui peuvent en tirer profit pour déterminer leurs itinéraires.

Il n'existe toutefois pas de dispositifs évolutifs et indépendants d'applications particulières, liés à la surveillance d'une portion de route. Il n'existe pas non plus de dispositif embarqué permettant le comptage fiable du nombre de passagers dans un véhicule.

### Résumé de l'invention

Le but de l'invention est de fournir un dispositif embarqué, qui soit donc facile à déployer sur le terrain, et à lui-seul capable de déterminer des fiches des véhicules détectés comportant notamment un nombre de passagers détectés associé à ce véhicule.

En outre, un avantage supplémentaire du dispositif de l'invention est de facilement permettre la mise en œuvre d'autres services de surveillance sur la base des informations qu'il permet de recueillir.

Pour ce faire, l'invention concerne un dispositif pour la surveillance d'une portion de route, comportant un boîtier sécurisé contenant au moins

- un ensemble d'appareils de prise de vue permettant d'obtenir au moins une prise de vue avant, une série de prise de vue de côté et au moins une prise de vue arrière, d'un véhicule présent sur ladite portion;
- une plateforme de traitement permettant de déterminer un identifiant dudit véhicule, de mettre en correspondance lesdites prises de vue pour ledit véhicule, de déterminer un nombre de passagers associés audit véhicule, de construire une fiche pour ledit véhicule rassemblant ledit identifiant, lesdites prises de vue, et ledit nombre de passagers et de transmettre ladite fiche vers un serveur distant.

Selon des modes de réalisation de l'invention, ce dispositif peut également comporter les caractéristiques suivantes, séparément ou en combinaison :

- ladite plateforme de traitement est configurée pour détecter la présence d'un véhicule dans une prise de vue avant et déclencher alors ladite série de prise de vue de côté ; aucune prise de vue de côté n'étant effectuée en l'absence d'une telle détection ;
- ladite plateforme de traitement est configurée pour détecter la présence d'un véhicule dans une prise de vue arrière et finaliser alors ladite fiche en vue de ladite transmission ;
- ladite plateforme de traitement est prévue pour déterminer ledit nombre de passagers dans en soumettant au moins une prise de vue de côté à un réseau de neurones de convolution de type Yolo ;
- la plateforme de traitement (T) est en outre configurée pour effectuer une lecture des plaques d'immatriculation présentes au sein desdites prises de vue afin de déterminer des numéros d'immatriculation ;
- chacune desdites prises de vue est associée à un horodatage, ledit horodatage étant conforme à une synchronisation fournie par un serveur de synchronisation via un protocole NTP ;
- ladite série de prises de vue de côté est effectuée dans l'infrarouge proche ;
- au moins ladite série de prise de vue de côté est effectuée en collaboration avec un illuminateur adaptée pour déclencher un éclairage de courte durée dans la direction de prise de vue et à une fréquence substantiellement égale à celle de prise de vue ;
- ladite plateforme de traitement est configurée pour détecter une congestion de ladite portion de route et, auquel cas, interrompre l'obtention de ladite série de prise de vue de côté ;
- ladite plateforme de traitement comporte au moins un microprocesseur et au moins une mémoire contenant un code informatique configuré pour faire fonctionner ladite plateforme de traitement en collaboration avec ledit au moins un microprocesseur.

L'invention concerne également un système comportant un dispositif tel que précédemment décrit et un appareil d'affichage à destination dudit véhicule, dans lequel les informations affichées sur ledit appareil sont déterminées à partir de ladite fiche.

L'invention a également pour objet un procédé pour la surveillance d'une portion de route, comportant

- l'obtention, par un ensemble d'appareils de prise de vue contenu dans un boitier sécurisé d'un dispositif, d'au moins une prise de vue avant, une série de prise de vue de côté et au moins une prise de vue arrière, d'un véhicule présent sur ladite portion;

- la détermination, par une plateforme de traitement contenue dans ledit boitier, d'un identifiant dudit véhicule,
- la mise en correspondance desdites prises de vue pour ledit véhicule
- la détermination d'un nombre de passagers associés audit véhicule,
- la construction d'une fiche pour ledit véhicule rassemblant ledit identifiant, lesdites prises de vue, et ledit nombre de passagers et
- la transmission de ladite fiche vers un serveur distant.

L'invention a également pour objet un programme d'ordinateur comportant des instructions prévues pour exécuter le procédé précédemment décrit lorsque celles-ci sont déployées sur un ordinateur.

**Brève description des figures**

Le dispositif selon l'invention va être décrit en association avec les figures contenues dans la demande :

- La figure 1 illustre schématiquement un contexte d'utilisation du dispositif selon un mode de réalisation de l'invention ;
- La figure 2 illustre schématiquement une architecture possible selon un mode de réalisation de l'invention ;
- La figure 3 schématise une architecture fonctionnelle du dispositif selon un mode de réalisation de l'invention.

**Description détaillée de l'invention**

Le dispositif selon l'invention vise à être un dispositif embarqué, c'est-à-dire dont l'ensemble des fonctionnalités sont fournies par les moyens techniques qu'il contient.

Ainsi, il suffit de le disposer à proximité d'une portion de route, et de l'orienter correctement pour qu'il puisse remplir sa mission. Il ne nécessite pas d'autres dispositifs avec lesquels il doive coopérer. Notamment, il ne nécessite pas de disposer d'autres caméras afin d'obtenir d'autres angles de vue de la scène observée : le dispositif selon l'invention se suffit à lui-même.

Il peut toutefois disposer d'une connexion afin de fournir les résultats de sa surveillance à un serveur centralisé distant.

D'un point de vue logistique, il est ainsi aisé de déployer l'invention puisqu'il suffit de transporter le dispositif jusqu'à un lieu d'opération sans procéder à aucune configuration. Il peut donc être installé et déplacé par du personnel non spécialisé et rapidement.

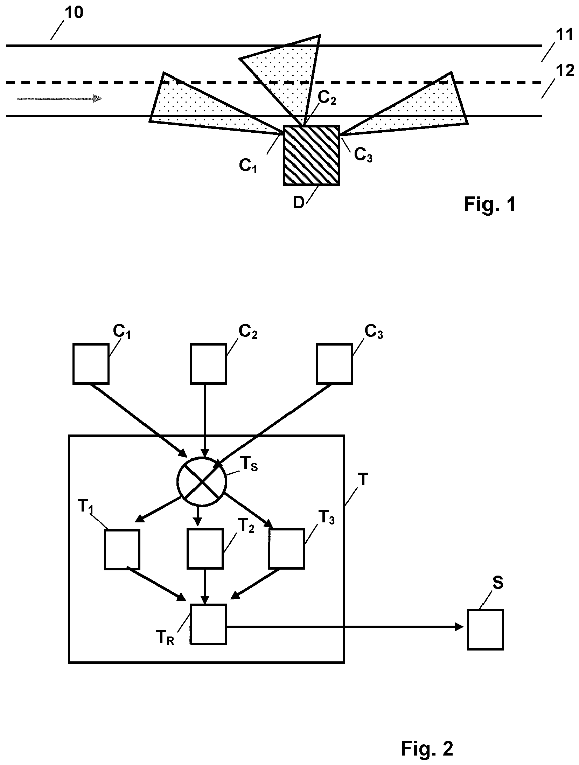

La FIGURE 1 illustre un contexte de mise en œuvre dans lequel le dispositif de surveillance D est positionné à proximité d'une route 10 comportant deux voies 11, 12.

Le dispositif D peut couvrir une portion de route définie par une section longitudinal (c'est-à-dire selon la direction de circulation) et éventuellement par une profondeur (c'est-à-dire un nombre de voies). Toutefois, dans le cadre de la plupart des routes, le dispositif D est à même de couvrir l'ensemble des voies d'une section de route. Les dimensions de cette couverture sont principalement limitées par la technologie des caméras embarquées.

Selon l'invention le dispositif est constitué d'un boîtier sécurisé contenant un ensemble de moyens techniques électroniques.

Ce boîtier vise en premier lieu à rendre le dispositif unitaire et à faciliter son transport et son installation. La facilité d'installation est importante pour abaisser le coût de déploiement d'un grand nombre de tels dispositifs, mais aussi pour limiter l'impact sur la voirie.

En outre, les opérations de maintenance sont facilitées par le fait que l'ensemble des moyens techniques du dispositif D sont regroupés au sein d'un même boîtier.

Le boitier est préférentiellement sécurisé afin de permettre sa résistance aux conditions météorologiques, à la pollution et aux actes de vandalisme.

Selon un mode de réalisation, le boîtier assure à la fois le rôle d'infrastructure de support et d'armoire technique pour l'ensemble des moyens techniques électroniques (caméras, circuiterie, plateforme de traitement, etc.).

Il peut être composé d'une structure métallique double enveloppe.

L'enveloppe intérieure, étanche, peut être essentiellement en aluminium. Elle accueille tous les équipements nécessaires aux raccordements et au fonctionnement des moyens techniques électroniques :

- Les éléments techniques de raccordement, de protection et de desserte des réseaux électrique et informatique ;
- Les différentes unités de traitement locales servant à l'asservissement des caméras, à l'analyse des images et vidéos, et à la transmission des informations à l'unité de traitement (serveur) déportée.
- Les caméras et les illuminateurs.

Cette enveloppe intérieure est conçue de sorte à faciliter les opérations de maintenance en permettant un accès aisé aux différents moyens techniques et en intégrant des supports assurant un réglage complet des capteurs et une conservation de ces réglages pendant les opérations d'échange standard.

L'enveloppe extérieure peut être en acier. Elle peut être prévue pour assurer une protection à la fois contre le vandalisme et contre la chaleur en réduisant l'incidence du rayonnement solaire. Elle peut ne comprendre aucune prise pour leviers et de toutes sortes, disposer de vitres en polycarbonate de 10 mn d'épaisseur remplaçables facilement et seules des vis à tête personnalisable peuvent permettre l'ouverture.

Les moyens techniques électroniques comprennent un ensemble d'appareils (C1, C2, C3) de prise de vue, ou caméras.

Sur la figure 1, trois caméras $C_1$, $C_2$, $C_3$ sont représentés mais davantage de caméras peuvent être prévues.

Ces caméras peuvent être classés en trois catégories en fonction de leurs orientations. Par leurs orientations respectives, elles permettent de d'obtenir au moins une prise de vue avant, une série de prise de vue de côté et au moins une prise de vue arrière, d'un véhicule présent sur la portion surveillée.

Au moins une caméra (ou appareil) est configurée pour obtenir au moins une prise de vue avant d'un véhicule. La configuration comprend notamment l'orientation de la caméra de sorte que l'angle d'ouverture de la caméra permette de capturer l'ensemble de l'avant du véhicule (c'est-à-dire sa face avant), et notamment d'obtenir une vue de la plaque d'immatriculation (si le véhicule en possède une) avec une qualité permettant d'effectuer une reconnaissance automatique de caractères.

Selon un exemple de réalisation, la (ou les) caméra de prise de vue avant $C_1$ permet d'obtenir une prise de vue selon un angle de -45° à -75° par rapport à l'axe perpendiculaire à la route 10 passant par le dispositif D.

Au moins une caméra (ou appareil) est configurée pour obtenir une série de prise de vue de côté du véhicule. La configuration comprend notamment l'orientation de la caméra de sorte que son angle d'ouverture permette de capturer l'ensemble du côté du véhicule (c'est-à-dire sa face latérale) et, autant que possible, l'ensemble des passagers du véhicule.

Notamment, la caméra est préférentiellement décalée par rapport à l'axe perpendiculaire à la route, afin de pouvoir capturer un éventuel passager situé du coté opposé à celui de la caméra et qui pourrait sinon être masqué par un passager situé du coté de la caméra.

Selon un exemple de réalisation, la (ou les) caméra de prise de vue de côté $C_2$ permet d'obtenir une prise de vue selon un angle de 5° à 35° par rapport à ce même axe.

Au moins une caméra (ou appareil) est configurée pour obtenir au moins une prise de vue arrière d'un véhicule. La configuration comprend notamment l'orientation de la caméra de sorte que l'angle d'ouverture de la caméra permette de capturer l'ensemble de l'arrière du véhicule (c'est-à-dire sa face arrière), et notamment d'obtenir une vue de la plaque d'immatriculation (si le véhicule en possède une) avec une qualité permettant d'effectuer une reconnaissance automatique de caractères.

Selon un exemple de réalisation, la (ou les) caméras de prise de vue arrière permet d'obtenir une prise de vue selon un angle de +45° à +75° par rapport à l'axe perpendiculaire à la route 10 passant par le dispositif D.

Par ailleurs, selon un mode de réalisation, les trois caméras sont positionnées et orientées, les unes par rapport aux autres, de sorte qu'entre leur champs respectifs, on ne peut pas avoir plus d'un véhicule (Ces orientations doivent donc être calculées, par simple calcul géométrique, par rapport à la position du dispositif par rapport à la portion de route observé).

Sur la figure 1, les triangles dont un des sommets correspond aux caméras $C_1$, $C_2$, $C_3$ illustrent, très schématiquement, les zones couvertes par ces caméras.

On comprend qu'un véhicule circulant dans le sens de la flèche sur la voie 12 (ou en sens inverse sur la voie 11) entrera successivement dans les zones de couverture des différentes caméras. Il peut arriver qu'un véhicule ne soit pas détectés par l'une ou l'autre des caméras, notamment en cas d'entrée ou sortie sur la voie entre ces zones de couverture (voie d'entrée ou sortie sur une autoroute, entrée/sortie de garage en milieu urbain, etc.)

Selon un mode de réalisation de l'invention, les caméras sont d'un type permettant d'améliorer la détection des passagers à l'intérieur des véhicules fermés, c'est-à-dire à travers les vitres des véhicules. Selon un mode de réalisation, les caméras peuvent également fonctionner en collaboration avec des illuminateurs adaptés pour déclencher un éclairage de courte durée dans la direction de prise de vue et à une fréquence de lumière substantiellement égale à celle de prise de vue.

En effet, pour le comptage des passagers, la performance passe par l'obtention d'images mettant en évidence l'information recherchée : il s'agit de visualiser l'intérieur des véhicules, en mouvement, au travers de vitres généralement traitées.

L'objectif recherché est de fournir aux algorithmes de détection automatique des images dans lesquelles des humains pourraient effectivement voir l'information recherchée. Pour ce faire, selon un mode de réalisation de l'invention, on recherche :

- L'augmentation du contraste interne du véhicule ;
- La suppression des reflets sur les vitres des véhicules, quand ceux-ci existent,
- Un cadrage adapté permettant de minimiser les masquages, tant liés à la carrosserie du véhicule qu'aux passagers.

Afin d'obtenir un contraste suffisant sur l'image pour distinguer les passagers, y compris la nuit, un mode de réalisation consiste à illuminer l'intérieur du véhicule en passant au travers du pare-brise pour la prise de vue avant et au travers des vitres latérales pour les passagers arrière.

Toutefois, un problème technique supplémentaire se pose en ce que la majorité des véhicules disposent aujourd'hui de surfaces vitrées traitées afin d'éviter réchauffement dû au rayonnement solaire dans l'habitacle (pare-brise athermique, vitre arrière teintée...). Ces traitements dont l'objectif est notamment de limiter la traversée des ultraviolets et des infrarouges sont particulièrement efficaces pour les infrarouges éloignées du domaine visible, ainsi qu'expérimenté.

Pour pallier ce problème, il est proposé d'associer des illuminateurs dans le domaine du visible et du proche infrarouge à des caméras sensibles sur cette plage de fréquences.

En effet, la longueur d'onde la plus efficace pour traverser des vitres teintées correspond à un rouge lointain, en limite d'infrarouge. Ce rayonnement est très peu visible de jour car mélangé à la lumière solaire, il devient perceptible la nuit par l'œil humain. Il est donc proposé d'exclure son utilisation de nuit pour un usage routier, afin d'éviter de perturber les passages, notamment le conducteur, au profit d'une lumière invisible située en début de spectre infrarouge, dans le domaine IR-A selon le découpage CIE (Commission Internationale de l'Éclairage). Par exemple, une longueur d'onde de 850 nm peut être utilisée. Cette lumière se situant dans le domaine de l'infrarouge proche, elle est invisible pour l'œil humain et ne génère donc aucune gêne pour la circulation.

Ce mode de réalisation peut être mis en place pour la (ou les) caméras de côté $C_2$ et également pour la caméra avant $C_1$, ces deux types de caméras pouvant être utilisées pour la détermination du nombre de passagers.

Selon un mode de réalisation, l'illumination est déclenchée pendant une courte période et synchronisée avec l'instant de la prise de vue. Cette illumination peut être puisée. Ce mode de réalisation permet d'obtenir un maximum d'efficacité d'éclairage tout en limitant la consommation électrique et la dissipation de chaleur.

Un autre problème technique supplémentaire, précédemment évoqué, est la suppression des reflets parasites sur le pare-brise avant et/ou sur les vitres latérales.

Pour ce faire, selon un mode de réalisation de l'invention, il est proposé d'utiliser un traitement dynamique et auto-adaptatif via un capteur optique matriciel intégrant nativement des filtres monochromes polarisés et capturant la lumière polarisée selon plusieurs plans, par exemple quatre. A titre d'exemple, on peut utiliser le capteur IMX250MZR de Sony.

Les polarisations peuvent être selon des directions équidistantes, par exemple 0, 45°, 90° et 135°.

Chaque pixel étant quadruplement (par exemple) polarisé, un mode de réalisation de l'invention peut consister à effectuer un traitement adapté pour une suppression maximale des reflets une vision optimale de l'intérieur des véhicules. Par exemple, pour chaque pixel, on peut effectuer une moyenne pondérée des différentes valeurs du pixel correspondantes à chacune des polarisations.

Il a été démontré expérimentalement que cette méthode permet de supprimer ou diminuer substantiellement les reflets sur les vitres des véhicules et d'ainsi améliorer beaucoup les performances de la détection des passagers et donc leur comptage.

La FIGURE 2 illustre une architecture fonctionnelle possible d'un dispositif D selon un mode de réalisation de l'invention.

Comme décrit précédemment, celui-ci comporte un ensemble d'appareils, ou caméras, $C_1$, $C_2$, $C_3$ pour la prise de vue avant, de côté et arrière d'une section de route.

Les flux de prises de vue générés par les différentes caméras sont transmis à une plateforme de traitement T, contenu dans ce même dispositif, pour traitement local.

Selon un mode de réalisation, la plateforme de traitement T peut comporter un répartiteur de charge $T_S$ et une pluralité d'éléments de traitement $T_1$, $T_2$, $T_3$ vers lesquels les flux sont répartis en fonction d'une politique de répartition de charge mis en œuvre par le répartiteur $T_S$.

Selon un mode de réalisation, la bande passante des flux peut varier d'une caméra à l'autre. Ainsi, la (ou les) caméra en charge de l'obtention d'une série de prise de vue de côté peut générer des flux avec des bandes passantes plus élevés. La répartition de charge peut suivre des stratégies différentes selon la bande passante des flux à traiter.

Par ailleurs, les connexions entre les caméras et les éléments de traitement et le répartiteur de charge peuvent également être différentes d'une caméra à l'autre.

Par exemple, dans un mode de réalisation particulier de l'invention, les caméras avant, $C_1$ et arrière $C_3$ émettent des flux de prises de vues sur des connexions Ethernet de débit maximum 1 Gbit/seconde vers le répartiteur de charge $T_S$. Ce dernier est connecté aux différents éléments de traitement $T_1$, $T_2$, $T_3$ par le truchement de connexions Ethernet de débit maximum 1 Gbit/seconde également. Par contre, la (ou les) caméras de côté $C_2$ est connecté directement à un élément de traitement $T_1$ via une connexion dédiée à plus haut débit, par exemple une connexion USB à 5 Gbits/secondes. Ces flux ne passent donc pas, dans cet exemple, par un répartiteur de charge (identique ou non que celui utilisé pour les flux émanant des caméras $C_1$ et $C_3$).

Les éléments de traitement $T_1$, $T_2$, $T_3$ effectue les traitements précédemment évoqués pour certain et qui seront explicités plus loin. Ces traitements comprennent notamment

- la détermination d'un identifiant d'un véhicule détecté,
- la mise en correspondance des prises de vue pour ce véhicule,
- la détermination d'un nombre de passagers associé à ce véhicule,
- et la construction d'une fiche pour le véhicule rassemblant ces informations, c'est-à-dire l'identifiant, l'ensemble des prises de vue retenues et le nombre de passagers

Une fois ces traitements effectués, les informations constituant la fiche d'un véhicule sont transmises à un élément de transmission $T_R$ en charge d'une transmission vers un serveur distant S. Cette transmission peut par exemple être une transmission radio, afin de faciliter le déploiement du dispositif D sur le terrain qui, du coup, ne nécessite aucun branchement et aucune mise en place d'une connexion filaire.

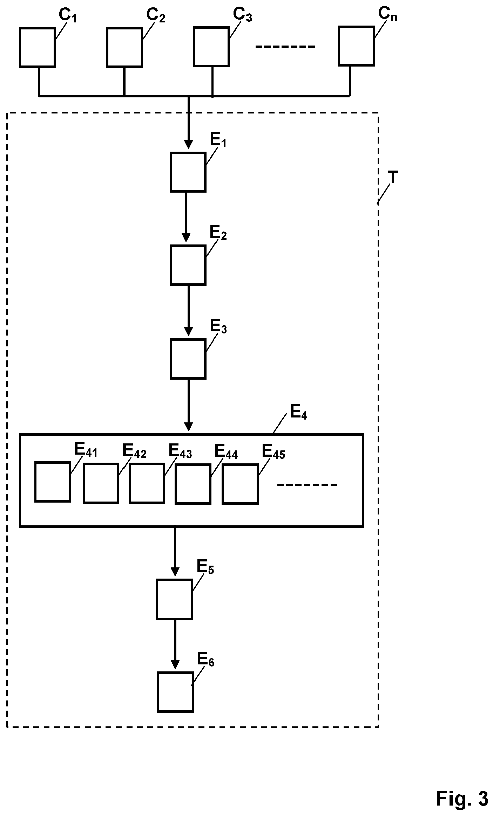

La figure 3 schématise une architecture fonctionnelle du dispositif D, et plus précisément de la plateforme de traitement T.

Les éléments fonctionnels $E_1$, $E_2$, $E_3$... $E_6$ sont des modules fonctionnels qui peuvent être mis en œuvre par des circuits électroniques spécifiques, des programmes d'ordinateurs mis en œuvre sur des microprocesseurs (en collaboration avec d'autres circuits associés tels des mémoires...) ou une combinaison de ceux-ci.

La division des différents traitements en éléments, ou modules, est purement fonctionnelle et permet la clarté de l'exposé. Il est clair, pour l'homme du métier, que d'autres architectures fonctionnelles peuvent être mises en place pour arriver aux mêmes effets techniques et que celles-ci peuvent donner lieu à des organisations concrètes diverses, notamment en tant qu'architecture d'un code informatique.

L'élément, ou module, $E_1$, correspond à l'acquisition des flux de prises de vue générés par les appareils de prise de vue $C_1$, $C_2$, $C_3$... $C_n$, dans lequel n est le nombre d'appareils de prise de vue que le dispositif D comporte.

Ces prises de vue peuvent être associées à des informations supplémentaires telles que par exemple les informations de polarisation associée à chaque prise de vue générée par les caméras lorsque celles-ci sont des capteurs polarisés. La génération d'une image traitée sur la base de la pluralité d'images polarisées fournies par ces caméras peut être prise en charge par ce module.

Selon un mode de réalisation de l'invention, cet élément de traitement $E_1$ génère donc

- des images (ou prises de vue), éventuellement traitées pour suppression/diminution des reflets, pour notamment le comptage de passagers,
- des flux vidéos (ou séries de prise de vues) pour certains autres traitements.

L'élément de traitement $E_1$ peut également piloter les caméras.

En particulier, il peut être prévu que les caméras de côtés $C_2$ ne soient déclenchées que si la caméra avant $C_1$ détecte la présence ou l'arrivée d'au moins un véhicule, afin de réduire la consommation liée à l'activité des caméras.

Plus précisément, la plateforme de traitement peut être prévue pour détecter la présence d'un véhicule dans une prise de vue avant et déclencher alors ladite série de prise de vue de côté ; aucune prise de vue de côté n'étant effectuée en l'absence d'une telle détection.

Également, selon un mode de réalisation, un mécanisme de détection de mouvements dans la série de prise de vue de côté peut être mis en œuvre. Ainsi, si aucun mouvement n'est détecté, il est possible d'interrompre les prises de vue, jusqu'à qu'un mouvement soit détecté à nouveau. Cette fonctionnalité permet par exemple de limiter la consommation de ressource lors d'un encombrement de la route. Dans ce cas les véhicules sont immobiles et une multiplicité de prises de vue n'apporterait aucune information pertinente supplémentaire par rapport à une unique prise de vue.

Selon un mode de réalisation de l'invention, cette étape peut être effectuée en déterminant en premier lieu une congestion sur le segment de route supervisé, puis, dans un second temps, en appliquant un algorithme d'estimation de flux optique dans l'ensemble des images numériques capturés par l'appareil de prise de vue de côté C2.

La détection de congestion peut être effectué en calculant un temps de parcours des véhicules entre leur détection par, respectivement, les appareils de prise avant C1 et arrière C3. En déterminant une forte diminution de ce temps de parcours par rapport à un historique, on peut aisément déterminer un niveau de trafic et donc une congestion d'une portion de route. Pour se faire, on peut attribuer des temps de détection aux véhicules sur les caméras à la milliseconde près.

Un exemple d'algorithme d'estimation de flux optique est par exemple la méthode de Lucas-Kanade ou l'algorithme de Farneback. Le flux optique est le mouvement apparent des objets, surfaces et contours d'une scène visuelle, causé par le mouvement relatif entre un observateur (l'œil ou une caméra) et la scène.

Le concept de flux optique a été étudié dans les années 1940 et des travaux ont été publiés dans Gibson, J.J., « The Perception of the Visual World », Houghton Mifflin, 1950. Les applications du flux optique telles que la détection de mouvement, la segmentation d'objets et la mesure de la disparité stéréoscopique utilisent le mouvement des textures de l'objet et de ses bords

L'élément de traitement $E_2$ est configurée pour horodater chaque prise de vue reçue de l'élément de traitement $E_1$.

Pour ce faire, il doit être synchronisé de façon précise, afin que chaque prise de vue, issue de caméras différentes, puissent être temporellement comparées entre elles. En outre, il peut être prévu de pouvoir comparer des prises de vue issues de différents dispositifs D et une synchronisation extérieure est alors importante.

Une telle synchronisation avec l'extérieur peut être apportée via le protocole NTP (« *Network Time Protocol* »). Ce protocole est défini, dans ses versions actuelles, par les RFC 1305 et 5905 de l'IETF (Internet Engineering Task Force). Il est par exemple présenté sur la page Wikipedia :

https://fr.wikipedia.org/wiki/Network Time Protocol

La fréquence d'interrogation du serveur NTP peut être prévue pour assurer une précision inférieure au dixième de seconde par rapport à ce référentiel externe.

L'horodatage peut être associé à chaque prise de vue qui est ensuite transmise à l'élément de traitement $E_3$. Cet horodatage peut être indiqué au millième de seconde près. Cette précision (selon un référentiel interne) permet d'améliorer les opérations de mise en correspondance mises en œuvre par le module de traitement $E_5$.

D'autres informations, en sus de l'horodatage, peuvent être associés à chaque prise de vue (par exemple par ce module $E_2$) : identifiant du dispositif D, numéro de séquence...

Une fois ces informations associées à une prise de vue, celle-ci peut être transmise à un élément de traitement $E_3$

Cet élément de traitement $E_3$ est prévu pour sélectionner des images pertinentes à envoyer aux différents modules d'analyse $E_4$

Par exemple,

- Un module $E_{41}$ de lecture de plaques d'immatriculation ne sera concerné que par les prises de vue issues des caméras avant et arrière (puisque les plaques ne sont en général pas visibles sur les prises de vue effectuées par la/les camera(s) de côté).
  Une première sélection peut donc être effectuée sur la base d'un critère lié au traitement à effectuer et à l'origine des prises de vues.
- Un module $E_{42}$ de détection et de comptage des passagers ne nécessite que des images ayant fait l'objet d'un prétraitement adéquat (suppression/réduction des reflets). Seuls les prises de vue provenant des caméras de côté et, éventuellement, avant doivent donc lui être transmises.
  En outre, un filtrage peut être effectué sur le contenu sémantique des prises de vue. Une prise de vue sur laquelle l'habitacle du véhicule n'est pas suffisamment visible sera inexploitable pour l'élément de traitement $E_{42}$ et peut dès lors ne pas être sélectionné pour transmission.

L'élément de traitement $E_4$ peut être vu comme en ensemble d'éléments d'analyse $E_{41}$, $E_{42}$, $E_{43}$, $E_{44}$, $E_{45}$... chacun étant spécialisé en une analyse (applicative) donnée. Chaque élément d'analyse peut donc définir des critères de sélection spécifiques auprès de l'élément de traitement $E_3$.

Ces éléments d'analyse peuvent être présents ou non, en fonction des modes de réalisation de l'invention. Également, d'autres éléments peuvent être prévus selon d'autres modes de réalisation.

Une des caractéristiques de l'invention est en effet d'offrir une plateforme évolutive dans laquelle les éléments de traitement de bas niveau $E_1$, $E_2$, $E_3$ fournissent une diversité d'information issue des caméras et enrichie permettant à des développeurs de concevoir des nouveaux éléments d'analyse pour en tirer profit et trouver place dans l'ensemble des éléments de traitement $E_4$. En outre, ces éléments d'analyse étant essentiellement logiciels, ils pourront être déployés par simple téléchargement depuis un serveur extérieur.

L'élément d'analyse $E_{41}$ consiste à effectuer une lecture des plaques d'immatriculation présentes sur les véhicules. Les plaques avant peuvent être lues sur les prises de vue avants et les plaques arrière peuvent être lues sur les prises de vue arrière.

La lecture comprend la détection d'une plaque d'immatriculation puis une étape de reconnaissance de caractères afin de transformer cette zone d'image numérique en une chaîne de caractères représentant un numéro d'immatriculation. Comme il sera décrit plus loin, ce numéro d'immatriculation peut constituer un identifiant du véhicule.

L'élément d'analyse $E_{42}$ consiste à déterminer un nombre de passagers associé aux véhicules. Cette fonctionnalité exploite les prises de vue de côté et peut également exploiter les prises de vue avant.

Selon un mode de réalisation, cette détermination peut comprendre la soumission des prises de vue à un réseau de neurones de convolution.

Ce réseau de neurones peut être de type Yolo.

Selon un mode de réalisation, une même prise de vue est soumise à deux réseaux de neurones distincts. Ces deux réseaux peuvent être de même type (par exemple de type Yolo) et architecturé de la même façon. Toutefois, des processus d'apprentissage distincts leur ont été imposés de sorte que leur état interne (poids synaptiques...) et donc le modèle prédictif qu'ils représentent soient différents.

Un premier réseau de neurones est configuré (notamment via son apprentissage) pour détecter des régions correspondant à des véhicules. Un second réseau de neurones est configuré pour détecter des régions correspondant à des visages.

Selon un mode de réalisation, les inférences sont mises en œuvre en parallèle, de sorte qu'une même image est soumise en même temps aux deux réseaux de neurones. En dernière étape, les résultats sont mis en correspondance afin de ne conserver que les visages détectés à l'intérieur des véhicules.

L'apprentissage des deux réseaux de neurones est effectué en soumettant un nombre aussi important que possible d'exemples d'images de véhicules contenant un ou plusieurs passagers. Cet ensemble d'apprentissage doit préférentiellement comporter une grande diversité d'images afin d'obtenir, en inférence, une robustesse et une précision dans la détection des passagers quelles que soient les conditions d'illumination (jour/nuit), la localisation des passagers, la teinte des vitres, etc.

Le réseau de neurones YOLO a été décrit dans l'article « You Only Look Once: Unified, Real-Time Object Détection » de Joseph Redmon, Santosh Divvala, Ross Girshick et Ali Garhadi, 2016.

Selon un mode de réalisation, la version 3 du modèle YOLO est utilisée. Celle-ci est décrit dans l'article « YOLOv3: An Incremental Improvement » de Joseph Redmon et Ali Farhadi, 2018.

YOLO est un réseau de neurones convolutif pour la détection d'objet construit sur le réseau Darknet53 qui est un classifieur d'images qui utilise 106 couches dont 53 couches de convolution.

Une des caractéristiques de la version 3 de YOLO est de proposer une prédiction d'une région d'intérêt (correspondant à un objet détecté) avec 3 résolutions différentes.

Après un ensemble de couches de sous-échantillonnage (81 couches), la couche suivante fournit une première détection à la résolution la plus basse. Les couches suivantes sont des couches de suréchantillonnage. Des nouvelles détections sont effectuées aux couches 94 et 106.

Dans la mesure où l'élément d'analyse $E_{42}$ mettant en œuvre ces réseaux YOLO doit être embarqué sur un dispositif D qui doit être le plus autonome possible, il peut être intéressant de réduire le nombre de paramètres de ces réseaux.

En effet, du fait du grand nombre de couches, un réseau de neurones convolutif tel que YOLO a un grand nombre de paramètres qui doivent être stockés en mémoire afin d'être utilisé en inférence sur les prises de vues.

Ce volume trop important n'est pas compatible avec une optimisation des temps de traitement du module d'analyse $E_{44}$ qui consister à mettre en place un mécanisme de répartition de charge. Ce mécanisme peut comprendre le déploiement de plusieurs processus, dans la mémoire du microprocesseur, chacun comportant une instance des mêmes réseaux de neurones YOLO et pouvant traiter, de façon concurrente, des flux de prises de vue. On comprend qu'en effet le volume nécessaire à chaque réseau de neurones soit un frein à la multiplication des réseaux de neurones dans une même mémoire, embarquée dans le dispositif D.

Selon un mode de réalisation, cette problématique est résolue en effectuant une taille, ou « *pruning* » selon le vocabulaire en langue anglaise consacré. Ce mécanisme est par exemple décrit dans la page Wikipédia consacrée :
https://en.wikipedia.org/wiki/Pruning_(artificial_neural_network)

Pour chaque prise de vue, une fois les visages détectés à l'intérieur des véhicules, on peut déterminer le nombre de ceux-ci et ainsi associer un nombre de passagers pour chaque véhicule détecté.

L'élément d'analyse $E_{43}$ peut consister au traitement particulier des véhicules à deux roues de type moto.

L'élément d'analyse $E_{44}$ peut consister à classifier les véhicules détectés.

L'élément d'analyse $E_{45}$ peut consister à la détection d'éléments particuliers comme les gyrophares ou les signes distinctifs des taxis, etc. Cet élément peut mettre en œuvre des algorithmes spécifiques d'analyse d'images numériques.

En particulier, selon un mode de réalisation, pour détecter les gyrophares, les prises de vue sont utilisées car celles-ci sont en couleur tandis que les prises de vue avant et de côté peuvent être monochromes. L'utilisation d'une image couleur est notamment nécessaire afin de déterminer la couleur et l'état des gyrophares (allumé ou éteint).

Ces informations sur la classe du véhicule peuvent venir enrichir une fiche descriptive du véhicule détecté. La présence de ces informations dans la fiche peut permettre de mettre en œuvre des traitements supplémentaires, soit embarqué au sein du dispositif D, soit déporté vers un serveur distant S, tels que des calculs de statistiques, la détection de la présence de véhicule sur une mauvaise voie (véhicules particuliers sur une voie réservée aux autobus ou aux taxis...).

Comme expliqué précédemment, d'autres éléments d'analyse peuvent également être présent au sein de l'élément de traitement $E_4$.

Chacun de ces éléments d'analyse peut ainsi déterminer des informations supplémentaires. L'ensemble de ces informations peut être associé à la prise de vue concerné, et transmise avec elle à un élément de traitement $E_5$ en charge de rassembler les prises de vue et information concernant un même véhicule et de construire une fiche pour ce véhicule.

Cette mise en correspondance de toutes les prises de vue issues des différentes caméras et des informations générées par les modules d'analyse sont rassemblées au sein d'une fiche relative à un véhicule. Cette fiche synthétise l'ensemble des données pertinentes rassemblées par le dispositif D.

Notamment, la fiche peut comprendre une prise de vue arrière. Selon un mode de réalisation, les prises de vue de côté et avant sont des images monochromes et polarisés (afin de faciliter la détection et le comptage de passager). Dès lors il est intéressant d'avoir une vue couleur du véhicule afin d'avoir une fiche descriptive du véhicule aussi complète que possible.

D'une façon générale, un mode de réalisation dans lequel le dispositif D dispose de 3 caméras (avant $C_1$, de côté $C_2$ et arrière $C_3$) dont un capteur monochromes avec filtrage polarisé offrant un bon compromis entre la limitation des ressources nécessaire (pour diminuer le coût et augmenter l'autonomie, notamment) et l'optimisation des fonctionnalités en permettant à la fois de réaliser une détection efficace des passagers et d'obtenir un flux de prises de vue couleur (via la caméra arrière) pour documenter la fiche et, éventuellement, réaliser d'autres fonctionnalités (détection de gyrophares....).

Cette caméra arrière peut donc avoir plusieurs fonctions: documentation de la fiche, détection de gyrophares, mais aussi acter la sortie d'un véhicule de la zone contrôlée par le dispositif D.

Il apparaît donc que ce mode de réalisation offre une optimisation des ressources en permettant à un minimum de caméra d'offrir, par leurs agencements, l'ensemble de ces fonctionnalités souhaitées.

La mise en correspondance peut être effectuée par l'élément de traitement de différentes façons.

Selon un mode de réalisation, cette mise en correspondance comprend des mécanismes de suivi de véhicules intra et inter caméras.

Comme indiqué précédemment, les caméras peuvent être positionnés et orientés de sorte qu'entre les champs capturés par deux caméras on ne peut avoir plus d'un véhicule. Dès lors, la mise en correspondance d'un même véhicule entre les différentes caméras s'en trouve facilité.

Dans le cas où la circulation est fluide, un seul véhicule peut être dans la scène filmée par la caméra de côté $C_2$. Dans un tel cas, le suivi du véhicule dans la série de prise de vue capturée par cette caméra est aisé et il est donc facile de regrouper ces différentes prises de vue pour constituer la fiche du véhicule correspondant.

Dans le cas où le trafic n'est pas fluide, plusieurs véhicules peuvent être simultanément présents dans les prises de vue. Dans un tel cas, le suivi d'un véhicule d'une prise de vue sur l'autre est moins évident, mais différentes techniques ont été mises au point.

L'article d'Erik Bochinski, Volker Eiselein et Thomas Sikora, « High-Speed Tracking-By-Detection Without Using Image Information »,

International Workshop on Traffic and Street Surveillance for Safety and Security, IEEE AVSS 2017, Lecca, Italie effectue un panorama de différentes solutions de l'état de la technique en la matière et propose une solution pouvant être mise en œuvre selon un mode de réalisation de l'invention.

Cette solution se base sur la mesure d'un indice de Jaccard ou « Intersection Over Union » (IOU) entre les boîtes englobantes résultants de la détection des véhicules sur deux images consécutives d'une série de prise de vue.

Si on s'intéresse à la surface entre deux véhicules détectés a et b, on peut définir cet indice IOU(a,b) par l'expression :

$$IOU(a,b) = \frac{A(a) \cap A(b)}{A(a) \cup A(b)}$$

dans laquelle A(a) et A(b) représentent respectivement la surface du véhicule détecté a (dans une première prise de vue) et la surface du véhicule détecté b (dans une seconde prise de vue).

Si la valeur IOU(a,b) est suffisamment élevée, on peut supposer que les véhicules détectés a et b représentent un même véhicule.

Une fois l'ensemble des informations mises en correspondance, une fiche est créée pour les regrouper dans une même structure de données.

Un identifiant peut être attribué à cette fiche.

Dans le cas où un numéro d'immatriculation a été déterminé, ce numéro peut être utilisé comme identifiant

Dans le cas où un numéro d'immatriculation ne peut être déterminé, d'autres éléments peuvent être utilisés comme identifiant pour la fiche. Par exemple, l'index de la détection qui est composé de la date, de l'heure (à la seconde près) et un nombre associé au passage du véhicule (Ex. AA-MM-JJ-HH-mm-ss-id).

La prise de vue par la caméra arrière $C_3$ peut être utilisé pour détecter la présence d'un véhicule et ainsi finaliser sa fiche : en effet, sa détection par cette caméra indique le véhicule s'éloigne de la zone couverte par le dispositif D et qu'aucune nouvelle information le concernant ne pourra être capturé. Sa fiche est finalisée et peut être transmise à l'élément de traitement $E_6$ pour transmission vers le serveur distant S.

Également, si un véhicule détecté et suivi par les caméras $C_1$ et $C_2$ n'apparait pas dans le flux de prises de vue de la caméra $C_3$, selon un mode de réalisation, on peut décider de finaliser sa fiche au bout d'un temps donné. Ce temps donné peut être prédéfini et correspondre à un seuil arbitraire ou estimé. Il peut également être dynamiquement ajusté en fonction d'une vitesse estimée des véhicules qui peut être déterminée à partir des séries de prises de vue de côté, par exemple.

L'élément de traitement $E_6$ peut ensuite transmettre chaque fiche ainsi construite vers un serveur déporté S.

Ce serveur S peut recevoir directement ou indirectement des fiches provenant de plusieurs dispositifs D.

Il peut être prévu de corréler les informations afin de mettre en correspondance des fiches provenant de plusieurs dispositifs D et correspondant à un même véhicule (même identifiant).

Le serveur S peut effectuer des statistiques à partir des fiches provenant du (ou des) dispositifs D : par exemple, un nombre de véhicules ou un débit de véhicules, un nombre moyen de passagers par véhicules, un nombre de véhicules par voies, etc.

Le serveur S peut également piloter un appareil destiné aux conducteurs des véhicules. Par exemple, un affichage au-dessus de la route peut être prévu et permettre de présenter des informations déterminées pour ce véhicule.

Ainsi, les informations affichées sur cet appareil d'affichage peuvent être déterminées à partir des fiches construites par le dispositif D (typiquement par le truchement du serveur S).

Ces informations peuvent être globales et concerner par exemple l'état du trafic.

Elles peuvent également être individualisées et concerner un véhicule en particulier : par exemple un véhicule ne circulant pas sur une bonne voie peut être ainsi signalé afin d'avertir son conducteur (par exemple une voie dédiée au covoiturage empruntée par un véhicule dans lequel un unique passager a été détecté).

Dans la mesure où cet affichage doit être effectué le plus rapidement possible vers les conducteurs, on peut estimer que le temps de traitement entre la capture des prises de vue et l'affichage doit être au maximum d'environ 3 secondes. Cette contrainte impose donc des exigences de rapidement de traitement au dispositif D qui doit mettre en place des traitements au fil de l'eau efficaces et proposer une architecture simplifiée permettant à la fois de respecter ces exigences mais aussi de permettre une évolution de ses fonctionnalités.

Bien entendu, la présente invention n'est pas limitée aux exemples et au mode de réalisation décrits et représentés, mais elle est susceptible de nombreuses variantes accessibles à l'homme de l'art.

## Revendications

1. Dispositif (D) pour la surveillance d'une portion de route, comportant un boîtier sécurisé contenant au moins

   - un ensemble d'appareils (C1, C2, C3) de prise de vue permettant d'obtenir au moins une prise de vue avant, une série de prise de vue de côté et au moins une prise de vue arrière, d'un véhicule présent sur ladite portion;
   - une plateforme de traitement (T1, T2, T3) permettant de déterminer un identifiant dudit véhicule, de mettre en correspondance lesdites prises de vue pour ledit véhicule, de déterminer un nombre de passagers associés audit véhicule, de construire une fiche pour ledit véhicule rassemblant ledit identifiant, lesdites prises de vue, et ledit nombre de passagers et de transmettre ladite fiche vers un serveur distant (S).

2. Dispositif selon la revendication précédente, dans lequel ladite plateforme de traitement est configurée pour détecter la présence d'un véhicule dans une prise de vue avant et déclencher alors ladite série de prise de vue de côté ; aucune prise de vue de côté n'étant effectuée en l'absence d'une telle détection.

3. Dispositif selon l'une des revendications précédentes, dans lequel ladite plateforme de traitement est configurée pour détecter la présence d'un véhicule dans une prise de vue arrière et finaliser alors ladite fiche en vue de ladite transmission.

4. Dispositif selon l'une des revendications précédentes, dans lequel ladite plateforme de traitement est prévue pour déterminer ledit nombre de passagers dans en soumettant au moins une prise de vue de côté à un réseau de neurones de convolution de type Yolo.

5. Dispositif selon l'une des revendications précédentes, dans lequel la plateforme de traitement (T) est en outre configurée pour effectuer une lecture des plaques d'immatriculation présentes au sein desdites prises de vue afin de déterminer des numéros d'immatriculation.

6. Dispositif selon l'une des revendications précédentes, dans lequel chacune desdites prises de vue est associée à un horodatage, ledit horodatage étant conforme à une synchronisation fournie par un serveur de synchronisation via un protocole NTP.

7. Dispositif selon l'une des revendications précédentes, dans lequel ladite série de prises de vue de côté est effectuée dans l'infrarouge proche.

8. Dispositif selon l'une des revendications précédentes, dans lequel au moins ladite série de prise de vue de côté est effectuée en collaboration avec un illuminateur adaptée pour déclencher un éclairage de courte durée dans la direction de prise de vue et à une fréquence substantiellement égale à celle de prise de vue.

9. Dispositif selon l'une des revendications précédentes, dans lequel ladite plateforme de traitement est configurée pour détecter une congestion de ladite portion de route et, auquel cas, interrompre l'obtention de ladite série de prise de vue de côté.

10. Dispositif selon l'une des revendications précédentes, dans lequel ladite plateforme de traitement comporte au moins un microprocesseur et au moins une mémoire contenant un code informatique configuré pour faire fonctionner ladite plateforme de traitement en collaboration avec ledit au moins un microprocesseur.

11. Système comportant un dispositif selon l'une des revendications précédentes et un appareil d'affichage à destination dudit véhicule, dans lequel les informations affichées sur ledit appareil sont déterminées à partir de ladite fiche.

12. Procédé pour la surveillance d'une portion de route, comportant

   - l'obtention, par un ensemble d'appareils de prise de vue contenu dans un boitier sécurisé d'un dispositif (D), d'au moins une prise de vue avant, une série de prise de vue de côté et au moins une prise de vue arrière, d'un véhicule présent sur ladite portion;
   - la détermination, par une plateforme de traitement contenue dans ledit boitier, d'un identifiant dudit véhicule,
   - la mise en correspondance desdites prises de vue pour ledit véhicule

- la détermination d'un nombre de passagers associés audit véhicule,
- la construction d'une fiche pour ledit véhicule rassemblant ledit identifiant, lesdites prises de vue, et ledit nombre de passagers et
- la transmission de ladite fiche vers un serveur distant (S).

13. Programme d'ordinateur comportant des instructions prévues pour exécuter le procédé de la revendication 12 lorsque celles-ci sont déployées sur un ordinateur.

Fig. 1

Fig. 2

Fig. 3

Europäisches
Patentamt

European
Patent Office

Office européen
des brevets

**RAPPORT DE RECHERCHE EUROPEENNE**

Numéro de la demande

EP 22 30 5492

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | US 2009/309974 A1 (AGRAWAL SHREEKANT [US] ET AL) 17 décembre 2009 (2009-12-17) * alinéa [0003] – alinéa [0004] * * alinéa [0013] * * alinéa [0015] * * alinéa [0017] – alinéa [0018] * * revendications 2, 4, 5 * * figure 1 * ----- | 1-13 | INV. G08G1/01 G06N3/02 G06V20/54 G08G1/04 G08G1/017 G06V20/59 G06V10/82 |
| Y | EP 3 926 529 A1 (FARECO [FR]) 22 décembre 2021 (2021-12-22) * alinéa [0025] * * alinéa [0050] * * alinéa [0055] * * alinéa [0059] * * alinéa [0062] * * alinéa [0068] * * alinéa [0073] * * revendication 15 * * figures 1A, 1B, 2 * ----- | 1-13 | |
| A | US 2008/175438 A1 (ALVES JAMES FRANCIS [US]) 24 juillet 2008 (2008-07-24) * alinéa [0015] * * alinéa [0019] * * alinéa [0024] * * alinéa [0027] * * alinéa [0030] * * revendications 1-3 * * figures 1, 2 * ----- -/-- | 1-13 | DOMAINES TECHNIQUES RECHERCHES (IPC) G08G G06K G06N G06V B60W |

Le présent rapport a été établi pour toutes les revendications

| Lieu de la recherche | Date d'achèvement de la recherche | Examinateur |
|---|---|---|
| La Haye | 5 septembre 2022 | Renaudie, Cécile |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
...........................................................
& : membre de la même famille, document correspondant

EPO FORM 1503 03.82 (P04C02)

page 1 de 2

Europäisches
Patentamt

European
Patent Office

Office européen
des brevets

# RAPPORT DE RECHERCHE EUROPEENNE

Numéro de la demande

EP 22 30 5492

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2015/294144 A1 (KONISHI YUSUKE [JP]) 15 octobre 2015 (2015-10-15) * figures 4, 5 * * alinéa [0007] * * alinéa [0021] * * alinéa [0037] * * alinéa [0040] * * alinéa [0059] * * revendications 1, 8 * ----- | 1-13 | |
| A | FR 3 048 104 A1 (HYMATOM [FR]) 25 août 2017 (2017-08-25) * revendication 1 * * figures 1, 2 * ----- | 1-13 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| La Haye | 5 septembre 2022 | Renaudie, Cécile |

CATEGORIE DES DOCUMENTS CITES

X : particulièrement pertinent à lui seul
Y : particulièrement pertinent en combinaison avec un
 autre document de la même catégorie
A : arrière-plan technologique
O : divulgation non-écrite
P : document intercalaire

T : théorie ou principe à la base de l'invention
E : document de brevet antérieur, mais publié à la
 date de dépôt ou après cette date
D : cité dans la demande
L : cité pour d'autres raisons

................................................................
& : membre de la même famille, document correspondant

EPO FORM 1503 03.82 (P04C02)

page 2 de 2

## ANNEXE AU RAPPORT DE RECHERCHE EUROPEENNE
## RELATIF A LA DEMANDE DE BREVET EUROPEEN NO.

EP 22 30 5492

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

05-09-2022

| Document brevet cité au rapport de recherche | Date de publication | Membre(s) de la famille de brevet(s) | Date de publication |
|---|---|---|---|
| US 2009309974 A1 | 17-12-2009 | AUCUN | |
| EP 3926529 A1 | 22-12-2021 | EP 3926529 A1 | 22-12-2021 |
| | | FR 3111449 A1 | 17-12-2021 |
| US 2008175438 A1 | 24-07-2008 | AUCUN | |
| US 2015294144 A1 | 15-10-2015 | JP 6354585 B2 | 11-07-2018 |
| | | JP WO2014061195 A1 | 05-09-2016 |
| | | US 2015294144 A1 | 15-10-2015 |
| | | US 2017017832 A1 | 19-01-2017 |
| | | WO 2014061195 A1 | 24-04-2014 |
| FR 3048104 A1 | 25-08-2017 | AUCUN | |

EPO FORM P0460

Pour tout renseignement concernant cette annexe : voir Journal Officiel de l'Office européen des brevets, No.12/82

## RÉFÉRENCES CITÉES DANS LA DESCRIPTION

**Littérature non-brevet citée dans la description**

- **GIBSON, J.J.** The Perception of the Visual World. *Houghton Mifflin,* 1950
- **JOSEPH REDMON ; SANTOSH DIVVALA ; ROSS GIRSHICK ; ALI GARHADI.** *You Only Look Once: Unified, Real-Time Object Détection,* 2016
- **JOSEPH REDMON ; ALI FARHADI.** *YOLOv3: An Incremental Improvement,* 2018
- **ERIK BOCHINSKI ; VOLKER EISELEIN ; THOMAS SIKORA.** *High-Speed Tracking-By-Detection Without Using Image Information*